(19) Europäisches Patentamt
European Patent Office
Office européen des brevets

(11) Numéro de publication: **0 193 869**
**B1**

(12) # FASCICULE DE BREVET EUROPÉEN

(45) Date de publication du fascicule du brevet: **14.12.88**

(51) Int. Cl.⁴: **H 01 M 6/14**

(21) Numéro de dépôt: **86102531.0**

(22) Date de dépôt: **27.02.86**

(54) **Générateur électrochimique dont la matière active négative est à base d'un métal alcalin ou alcalinoterreux.**

(30) Priorité: **05.03.85 FR 8503210**

(43) Date de publication de la demande:
**10.09.86 Bulletin 86/37**

(45) Mention de la délivrance du brevet:
**14.12.88 Bulletin 88/50**

(84) Etats contractants désignés:
**AT BE CH DE FR GB IT LI LU NL SE**

(56) Documents cité:
**US-A-3 073 884**
**US-A-3 567 515**
**US-A-4 362 794**
**US-A-4 403 021**

**PATENTS ABSTRACTS OF JAPAN, vol. 8, no. 200 (E-266) 1637 , 13 septembre 1984, page 29 E 266; & JP - A - 59 87 769 (NIHON DENCHI K.K.) 21-05-1984**

(73) Titulaire: **Société Anonyme dite SAFT, 156, avenue de Metz, F-93230 Romainville (FR)**

(72) Inventeur: **Chenebault, Philippe, 35 rue Ladmirault, F-86000 Poitiers (FR)**
Inventeur: **Vallin, Didier, 18 La Vallée des Pierres Brunes Smarves, F-86240 Liguge (FR)**

(74) Mandataire: **Weinmiller, Jürgen, Lennéstrasse 9 Postfach 24, D-8133 Feldafing (DE)**

**EP 0 193 869 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

La présente invention concerne un générateur électrochimique dont la matière active négative est à base d'un métal alcalin ou alcalinoterreux, et la matière active positive est un oxyhalogénure liquide, tel que le chlorure de thionyle, qui constitue également le solvant d'électrolyte, ce dernier pouvant comporter d'autres co-solvants.

Lorsqu'une pile de ce genre n'est pas en cours de décharge, la substance liquide faisant fonction de matière positive et de solvant d'électrolyte réagit avec le métal de l'électrode négative, de sorte qu'il se forme sur cette électrode un film superficiel protecteur. La présence d'un tel film constitue un inconvénient car il peut en résulter au début de la décharge un "retard de montée en tension"; autrement dit, la tension normale de fonctionnement n'est atteinte qu'au bout d'un certain temps. Ce phénomène est d'autant plus important que la durée et la température de stockage sont plus élevées.

Diverses solutions ont déjà été proposées pour réduire le plus possible ce "retard de montée en tension".

Ainsi le brevet américain n° 4 309 940 publié le 5 janvier 1982 décrit une pile au lithium-chlorure de thionyle, dont le soluté de l'électrolyte est un sel complexe résultant de l'action du chlorure de lithium LiCl sur le chlorure d'aluminium $AlCl_3$, ce dernier étant totalement neutralisé par LiCl pour former $LiAlCl_4$. Le brevet prévoit d'ajouter à l'électrolyte une certaine quantité d'anhydride sulfureux $SO_2$, le rapport molaire $AlCl_3/SO_2$ étant compris entre 0,9 et 1,5. Cette méthode implique donc l'introduction de concentrations importantes d'anhydride sulfureux, ce qui peut conduire à des phénomènes de pressurisation des piles et à des difficultés pratiques de mise en oeuvre.

Il a été proposé par ailleurs dans le brevet américain n° 4 228 229 publié le 14 octobre 1980 et dans le brevet français n° 2 485 271 publié le 24 décembre 1981, d'autres techniques mettant en oeuvre la neutralisation partielle ou totale de solutions de chlorure d'aluminium par des bases de Lewis autres que LiCl, par exemple $Li_2O$ ou $Li_2CO_3$. Ces techniques ont permis d'obtenir une amélioration notable par rapport à l'électrolyte initial préparé par neutralisation d'une solution de $AlCl_3$ par LiCl. Elles conduisent à l'obtention de solutions contenant également de l'anhydride sulfureux $SO_2$. Dans ce cas, il est généré "in situ" au cours de la neutralisation de $AlCl_3$ par les bases de Lewis correspondantes, mais dans des proportions telles que le rapport molaire $AlCl_3/SO_2$ est au moins égal ou supérieur à 2, selon le degré de neutralisation choisi.

A titre d'exemple, on a utilisé, pour des raisons liées à l'autodécharge des piles, des électrolytes entièrement neutralisés (rapport molaire $AlCl_3/SO_2 = 2$), avec une concentration en $LiAlCl_4$ correspondant à 1,35 mole/litre.

La réaction mise en oeuvre est par exemple la suivante:

$$2AlCl_3 + Li_2O + SOCl_2 \rightarrow 2\,LiAlCl_4 + SO_2.$$

Bien que la solution explicitée ci-dessus ait apporté des améliorations notables pour la réduction des temps de montée en tension, elle s'est révélée encore insuffisante pour un certain nombre d'applications.

La présente invention a pour but de réduire encore le temps de montée en tension.

La présente invention a pour objet un générateur électrochimique dont la matière active négative est à base d'un métal alcalin ou alcalinoterreux, et dont l'électrolyte comprend un soluté et au moins un solvant choisi parmi les oxyhalogénures liquides, ledit solvant constituant également la matière active positive; ledit électrolyte contient en outre au moins un composé organique de type polyorganosulfatométallate alcalin ou alcalinoterreux de formule générale

$$M\ \{M'\,(SO_3R)_i\,(SO_3R')_j\,(X)_k\}_m \text{ avec } i + j + k = n$$

où

- M est ledit métal alcalin ou alcalinoterreux, m étant son degré d'oxydation
- M' est choisi parmi Al, B, Ga, In, V, Sb, Nb, Si, W, Ta, n étant sa valence
- R désigne un radical organique de type alkyl, aryl, alkaryl ou aralkyl avec $0 \leqslant i \leqslant n$,
- R' désigne un radical organique de type alkyl, aryl, alkaryl ou aralkyl avec $0 \leqslant j \leqslant n$, ($i \neq 0$ si $j = 0$ et $j \neq 0$ si $i = 0$)
- X est choisi parmi le fluor, le chlore, le brome et l'iode avec $0 \leqslant k < n$.

Par exemple, quand M = Li, M' = Al, R = $CH_3$, le composé obtenu répond à la formule $LiAl\,(SO_3CH_3)_4$

Quand M = Na, M' = Al et R = $C_2H_5$, le composé obtenu répond à la formule $Na\,Al\,(SO_3C_2H_5)_4$.

Quand M = Li, M' = Al et R = $CF_3$, le composé obtenu répond à la formule $LiAl\,(SO_3CF_3)_4$.

La concentration de ce composé organique est supérieure à 0,01 % en poids d'électrolyte.

Selon un mode de réalisation particulièrement avantageux, la matière active négative est à base de lithium et ledit solvant est le chlorure de thionyle $SOCl_2$; le soluté est constitué de $LiAlCl_4$ et le composé organique répond à la formule $LiAl(SO_3\,CH_3)_4$.

Selon une variante, la matière active négative est à base de sodium, ledit solvant est constitué de chlorure de thionyle; ledit soluté est constitué de $NaAlCl_4$ et ledit composé organique répond à la formule $NaAl(SO_3\,CH_3)_4$.

La matière active négative peut être également à base de calcium, magnésium et potassium.

L'oxyhalogénure peut être aussi le chlorure de phosphoryle $POCl_3$, le trichlorure de vanadyle $VOCl_3$, le tribromure de vanadyle $VOBr_3$, le bromure de thionyle $SOBr_2$, le chlorure de sulfuryle $SO_2Cl_2$, le chlorure de chromyle $CrO_2Cl_2$, l'oxychlorure de sélénium $SeOCl_2$, et leur mélanges.

De préférence, l'électrolyte contient en outre de l'anhydride sulfureux dissous.

Pour obtenir ledit composé organique, on peut l'ajouter directement dans l'électrolyte, ou l'obtenir in situ en faisant réagir ledit électrolyte avec un composé organique de formule $RSO_3H$ du type acide alkylsulfonique, arylsulfonique, alkarylsulfonique ou aralkylsulfonique, ou avec un mélange de ces composés, ou de leurs anhydrides.

Selon un mode avantageux, on utilise de l'acide méthanesulfonique et il se produit la réaction suivante:

$$LiAlCl_4 + 4\,H\,SO_3CH_3 \rightarrow 4\,HCl + LiAl\,(SO_3CH_3)_4$$

L'acide chlorhydrique formé peut aisément être éliminé par chauffage sous reflux.

D'autres caractéristiques et avantages de la présente invention apparaîtront au cours de la description suivante de divers modes de réalisation donnés à titre illustratif, mais nullement limitatif. Dans le dessin annexé, la figure unique est une vue schématique en coupe d'une pile selon l'invention.

On a réalisé plusieurs séries de piles du type de celle qui apparaît dans la figure. Ces piles, de forme cylindrique, ont les dimensions suivantes: Hauteur: 50 mm, diamètre extérieur: 13,4 mm.

La pile 1 illustrée comporte un godet 2 en une feuille complexe constituée par une feuille d'acier inoxydable et une feuille de nickel laminées ensemble, la feuille de nickel étant tournée vers l'intérieur. La fermeture du godet se compose d'un anneau 3 en acier inoxydable soudé en 4 au bord du godet et qui est électriquement isolé d'un cylindre 5 en alliage de ferro-nickel par un joint étanche en verre 6. Ce cylindre 5 est fermé par un bouchon 7 en alliage de ferro-nickel qui lui est soudé en 8. Un disque de polytétrafluoréthylène 9 protège l'anneau 3 de l'attaque chimique des composants de la pile.

La pile est ainsi fermée hermétiquement. Elle est terminée extérieurement par un capot 10 en acier inoxydable qui coiffe le cylindre 5 et est en contact avec un anneau 11 qui s'enfile à force sur le cylindre 5. L'anneau 11 est isolé de l'anneau 3 par un anneau 12 en polytétrafluoréthylène.

Le godet est enveloppé dans une gaine 13 en chlorure de polyvinyle et une couche de résine thermodurcissable 14 protège les bords du capot 10.

Le collecteur cathodique 15 est un cylindre poreux constitué par un mélange de 85 % de noir d'acétylène et de 15 % de polytétrafluoréthylène au contact du godet 2. L'anode 16 est constituée par une feuille de lithium enroulée sur le collecteur anodique 17, lui-même constitué par une grille de nickel enroulée. Un ressort 18 en acier inoxydable tend à repousser l'anode vers le collecteur cathodique 15 dont elle est séparée par un séparateur 19. Un disque 20 de polytétrafluoréthylène isole l'anode du fond du godet 2. Le ressort 18 est soudé au cylindre 5, de sorte que le capot 10 constitue la borne négative de la pile dont le godet 2 constitue la borne positive par son fond non protégé par la gaine 13. L'aire anodique faisant face au collecteur cathodique est de 10 $cm^2$.

On a introduit dans l'élément deux types de solutions qui servent à la fois d'électrolyte et de matière active positive.

- Electrolyte A - Il s'agit d'un électrolyte de l'art antérieur. On l'obtient par neutralisation d'une solution de $AlCl_3$ dans le chlorure de thionyle par la base de Lewis $Li_2\,CO_3$. La réaction est la suivante:

$$Li_2CO_3 + 2AlCl_3 + SOCl_2 \rightarrow 2\,LiAlCl_4 + SO_2 + CO_2$$

La concentration en $LiAlCl_4$ est de 1,35 moles par litre.

- Electrolyte B (selon l'invention) - On ajoute à l'électrolyte A 0,5 % (en poids d'électrolyte) de tétraméthanosulfatoaluminate de lithium $LiAl(SO_3CH_3)_4$

On a donc réalisé deux séries de piles A, B, qui ont été stockées dix-neuf jours à température ambiante puis maintenues sept jours et un mois à 70° C. Vingt quatre heures après leur sortie de l'étuve, les tests suivants ont été réalisés

- mesure de l'impédance Z (en ohms) sous 40 Hertz
- mise en décharge à la température ambiante sur une résistance de 57 ohms (densité de courant sensiblement égale à 5mA/$cm^2$); la tension U aux bornes de la pile a été mesurée 0,3 seconde, 5 secondes et 60 secondes après la mise en décharge.

Les résultats moyens obtenus ont été reportés dans les tableaux ci-dessous.

- Après 19 jours à température ambiante.

| Piles | Fe m (volts) | Z (ohms) | U (0,3s) (volts) | U (5s) (volts) | U (60s) (volts) |
|---|---|---|---|---|---|
| A | 3,673 | 188 | 2,44 | 2,75 | 2,99 |
| B | 3,670 | 22 | 3,17 | 3,42 | 3,40 |

- Après 19 jours à température ambiante, puis 7 jours à 70°C

| Piles | Fe m (volts) | Z (ohms) | U (0,3s) (volts) | U (5s) (volts) | U (60s) (volts) |
|---|---|---|---|---|---|
| A | 3,739 | 413 | 2,33 | 2,52 | 2,69 |
| B | 3,693 | 37 | 3,21 | 3,44 | 3,41 |

- Après 19 jours à température ambiante, puis 1 mois à 70°C

| Piles | Fe m (volts) | Z (ohms) | U (0,3s) (volts) | U (5s) (volts) | U (60s) (volts) |
|---|---|---|---|---|---|
| A | 3,757 | 566 | 2,00 | 1,88 | 1,90 |
| B | 3,710 | 51 | 3,28 | 3,41 | 3,37 |

L'amélioration apportée par l'invention apparaît clairement dans ce tableau.

Bien entendu les quantités de composé organique ont été données à titre indicatif, la quantité de ce composé pouvant varier de 0,01 % jusqu'à la saturation dans l'électrolyte.

Selon une variante, le lithium peut être remplacé par le sodium; le soluté est alors avantageusement $NaAlCl_4$ et le composé organique peut être $NaAl(SO_3CH_3)_4$. Mais il peut être également remplacé par le calcium ou le potassium.

Selon d'autres modes de réalisation mettant en oeuvre une anode de lithium, les solutés envisagés peuvent avoir les formules suivantes: $LiBCl_4$, $LiGaCl_4$, $LiInCl_4$, $LiVCl_4$, $LiSiCl_5$, $LiSbCl_6$, $LiNbCl_6$, $LiTaCl_6$, $LiWCl_7$.

Dans les formules de solutés et de composés organiques additionnels, le chlore peut être remplacé par le fluor, le brome ou l'iode.

## Revendications

1. Générateur électrochimique dont la matière active négative est à base d'un métal alcalin ou alcalinoterreux et dont l'électrolyte comprend un soluté et au moins un solvant choisi parmi les oxyhalogénures liquides, ledit solvant constituant également la matière active positive, caractérisé par le fait que ledit électrolyte contient en outre au moins un composé organique de type polyorganosulfatométallate alcalin ou alcalinoterreux de formule générale

$M' \{M' (SO_3R)_i (SO_3R')_j (X)_k\}_m$ avec $i + j + k = n$

où:

- M est ledit métal alcalin ou alcalinoterreux, m étant son degré d'oxydation
- M' est choisi parmi Al, B, Ga, In, V, Sb, Nb, Si, W, Ta, n étant sa valence

R désigne un radical organique de type alkyl, aryl, alkaryl ou aralkyl avec $0 \leqslant i < n$,
- R' désigne un radical organique de type alkyl, aryl, alkaryl ou aralkyl avec $0 \leqslant j < n$, ($i \neq 0$ si $j = 0$ et $j \neq 0$ si $i = 0$)
- X est choisi parmi le fluor, le chlore, le brome et l'iode avec $0 \leqslant k < n$.

2. Générateur selon la revendication 1, caractérisé par le fait que la concentration dudit composé organique est supérieure à 0,01 % en poids d'électrolyte.

3. Générateur selon l'une des revendications 1 et 2, caractérisé par le fait que ledit électrolyte contient en outre de l'anhydride sulfureux.

4. Générateur électrochimique selon l'une des revendications 1 et 2, caractérisé par le fait que ledit oxyhalogénure liquide est le chlorure de thionyle, que ledit métal alcalin est le lithium et que ledit soluté répond à la formule $LiM'Cl_x$.

5. Générateur électrochimique selon la revendication 4, caractérisé par le fait que le soluté dudit électrolyte est constitué de tétrachloroaluminate de lithium $LiAlCl_4$.

6. Générateur électrochimique selon la revendication 5, caractérisé par le fait que ledit composé organique

est un tétraméthanesulfatoaluminate de lithium de formule $LiAl(SO_3CH_3)_4$.

7. Générateur électrochimique selon l'une des revendications 4 à 6, caractérisé par le fait que ledit électrolyte contient en outre de l'anhydride sulfureux, le rapport molaire $M'/SO_2$ étant supérieur à 1,5.

8. Générateur électrochimique selon l'une des revendications 1 et 2, caractérisé par le fait que ledit oxyhalogénure liquide est le chlorure de thionyle, que ledit métal alcalin est le sodium, et que ledit soluté est constitué de tétrachloroaluminate de sodium $NaAlCl_4$.

9. Générateur électrochimique selon la revendication 8, caractérisé par le fait que ledit composé organique est un tétraméthanesulfatoaluminate de sodium de formule $NaAl(SO_3CH_3)_4$.

10. Procédé de fabrication d'un générateur selon l'une des revendications précédentes, caractérisé par le fait que ledit composé organique est ajouté directement dans l'électrolyte.

11. Procédé de fabrication d'un générateur selon la revendication 10, caractérisé par le fait que ledit composé organique est obtenu in situ par réaction dudit électrolyte avec au moins un composé choisi parmi la série des acides sulfoniques organiques $RSO_3H$ et de leurs anhydrides $(RSO_2)_2O$.

## Patentansprüche

1. Elektrochemischer Generator, bei dem das negative aktive Material als Basis ein Alkalimetall oder ein Erdalkalimetall besitzt und dessen Elektrolyt einen Lösungsstoff und Rindestens ein unter den flüssigen Oxyhalogeniden ausgewähltes Lösungsmittel umfaßt, wobei das Lösungsmittel zugleich das positive aktive Material bildet, dadurch gekennzeichnet, daß der Elektrolyt weiter mindestens eine organische Verbindung vom Typ der alkalischen oder erdalkalischen Polyorganosulfatmetallate nach der allgemeinen Formel

$$M\ \{M'(SO_3R)_i\,(SO_3R')_j\,(X)_k\}_m \text{ mit, } i + j + k = n$$

enthält, worin bedeuten:

- M das genannte Alkali- oder Erdalkalimetall, wobei m der Oxidationsgrad ist,
- M' wird gewählt aus Al, B, Ga, In, V, Sb, Nb, Si, W, Ta, wobei n seine Valenz ist,
- R bezeichnet ein organisches Radikal vom Typ Alkyl, Aryl, Alkaryl oder Aralkyl, wobei $o \leqslant i < n$ gilt,
- R' bezeichnet ein organisches Radikal von Typ Alkyl, Aryl, Alkaryl oder Aralkyl, wobei $0 \leqslant j < n$ ($i \neq 0$ falls $j = 0$ und $j \neq 0$ falls $i = 0$) ist,
- X wird gewählt aus Fluor, Chlor, Brom oder Jod, wobei $0 \leqslant k < n$ gilt.

2. Generator nach Anspruch 1, dadurch gekennzeichnet, daß die Konzentration der organischen Verbindung über 0,01 % des Elektrolytgewichts liegt.

3. Generator nach einem der Ansprüche 1 und 2, dadurch gekennzeichnet, daß der Elektrolyt weiter Schwefeldioxid enthält.

4. Generator nach einem der Ansprüche 1 und 2, dadurch gekennzeichnet, daß das flüssige Oxyhalogenid Thionylchlorid und das alkalische Metall Lithium ist und daß der Lösungstoff der Formel $LiM'Cl_x$ entspricht.

5. Elektrochenischer Generator nach Anspruch 4, dadurch gekennzeichnet, daß das Lösungsprodukt des Elektrolyten aus Lithiumtetrachloraluminat $LiAlCl_4$ besteht.

6. Elektrochemischer Generator nach Anspruch 5 dadurch gekennzeichnet, daß die organische Verbindung ein Lithiumtetramethansulfataluminat gemäß der Formel $LiAl(SO_3CH_3)_4$ ist.

7. Elektrochemischer Generator nach einem der Ansprüche 4 bis 6, dadurch gekennzeichnet, daß der Elektrolyt weiter Schwefeldioxid enthält, wobei das Molverhältnis $M'/SO_2$ über 1,5 liegt.

8. Elektrochemischer Generator nach einem der Ansprüche 1 und 2, dadurch gekennzeichnet, daß das flüssige Oxyhalogenid Thionylchlorid und das alkalische Metall Natrium ist, und daß der Lösungsstoff aus Natriumtetrachloraluminat $NaAlCl_4$ besteht.

9. Elektrochemischer Generator nach Anspruch 8, dadurch gekenzeichnet, daß die organische Verbindung ein Natriumtetramethansulfataluminat gemäß der Formel $NaAl(SO_3CH_3)_4$ ist.

10. Verfahren zur Herstellung eines Generators nach einem der vorhergehenden Ansprüche, dadurch gekennzeichnet, daß die organische Verbindung direkt in den Elektrolyten gegeben wird.

11. Verfahren zur Herstellung eines Generators nach Anspruch 10, dadurch gekennzeichnet, daß die organische Verbindung in situ durch Reaktion des Elehtrolyten mit mindestens einer der aus der Reihe der organischen schwefligen Säuren $RSO_3H$ und ihrer Anhydride $(RSO_2)_2O$ gewählten Verbindungen gebildet wird.

## Claims

1. An electrochemical generator, the negative active material whereof is based on an alkaline or alkaline earth metal and the electrolyte whereof comprises a solute and at least one solvent selected from among the liquid oxyhalides, said solvent also constituting the positive active material, characterized in that the

electrolyte further contains at least one organic compound of the alkaline or alkaline earth polyorganosulfatometallate type having the general formula

$M \{M' (SO_3R)_i (SO_3R')_j (X)_k\}_m$, with $i + j + k = n$

in which:

- M is the said alkaline or alkaline earth metal and m its degree of oxidation,
- M' is selected from among Al, B, Ga, In, V, Sb, Nb, Si, W, Ta, n being its valence,
- R designates an organic radical of the alkyl, aryl, alkaryl or aralkyl type, with $o \leqslant i < n$,
- R' designates an organic radical of the alkyl, aryl, alkaryl or aralkyl type, with $0 \leqslant j < n$ ($i \neq 0$ if $j = 0$ and $j \neq 0$ if $i = 0$),
- and X is selected from the group including fluorine, chlorine, bromine and iodine, with $0 \leqslant k < n$.

2. A generator according to claim 1, characterized in that the concentration of the organic compound is greater than 0,01 % by weight of electrolyte.

3. A generator according to one of claims 1 and 2, characterized in that the electrolyte further contains sulfur dioxide.

4. An electrochemical generator according to one of claims 1 and 2, characterized in that the liquid oxyhalide is thionyl chloride, the alkaline metal is lithium and the solute has the formula $LiM'Cl_x$.

5. An electrochemical generator according to claim 4, characterized in that the electrolyte solute is constituted by lithium tetrachloroaluminate $LiAlCl_4$.

6. An electrochemical generator according to claim 5, characterized in that the organic compound is a lithium tetramethanesulfatoaluminate having the formula $LiAl(SO_3CH_3)_4$.

7. An electrochemical generator according to one of the claims 4 through 6, characterized in that the electrolyte contains in addition sulfur dioxide, the molar ratio of M' to $SO_2$ being greater than 1,5.

8. An electrochemical generator according to one of claims 1 and 2, characterized in that the liquid oxyhalide is thionyl chloride, the alkaline metal is sodium and the solute is sodium tetrachloroaluminate $NaAlCl_4$.

9. An electrochemical generator according to claim 8, characterized in that the organic compound is a sodium tetramethanesulfatoaluminate according to the formula $NaAl(SO_3CH_3)_4$.

10. A method of manufacturing a generator according to one of the preceding claims, characterized in that said organic compound is added directly to the electrolyte.

11. A method of manufacturing a generator according to claim 10, characterized in that the organic compound is obtained by in situ reaction of the electrolyte with at least one compound selected from the group of organic sulfonic acids $RSO_3N$ and their anhydrides $(RSO_2)_2O$.

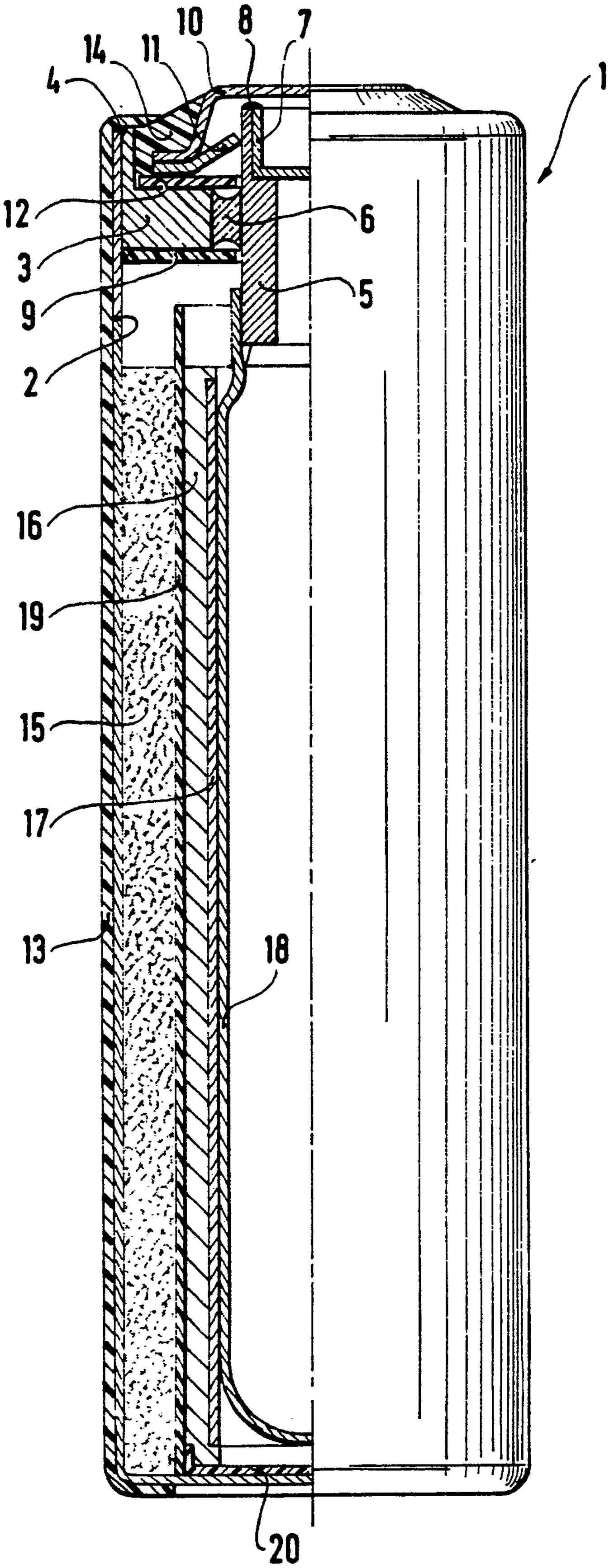
1
10
8
7
14
11
4
12
6
3
5
9
2
16
19
15
17
13
18
20